# EUROPEAN PATENT APPLICATION

(11) **EP 4 742 560 A1**
(43) Date of publication of application: **13.05.2026**
(21) Application number: 24383229.2
(22) Date of filing: 11.11.2024
(51) Int. Cl.: H04B 10/118, H04B 10/70

(54) **DEVICE, SYSTEM AND METHOD FOR AUTOMATIC PHOTON POLARIZATION CORRECTION IN QUANTUM KEY DISTRIBUTION SYSTEMS**

(71) Applicant: Consejo Superior De Investigaciones Científicas - CSIC, 28006 Madrid (ES)
(72) Inventor: LLANOS VELASCO, Adrián, 28006 Madrid (ES); ARTEAGA DÍAZ, Pablo, 28006 Madrid (ES); FERNÁNDEZ MÁRMOL, Verónica, 28006 Madrid (ES)
(74) Representative: TRBL Intellectual Property

(57) **Abstract**

The present invention discloses a device (1) for receiving an initial sequence (2) of polarized photons, modifying the polarization of each of said photons and performing measurements upon each of said photons according to an embodiment of the present invention. The device (1) comprises a beam splitter (3); two half-wave plates (4, 4'), two quarter-wave plates (5, 5'); two polarizer beam splitters (6, 6'), four single-photon detectors (7, 7', 7", 7‴), tagging means (8) connected to the single-photon detectors (7, 7', 7", 7‴) and rotating means (9) connected to the half-wave (4, 4') and quarter-wave plates (5, 5'). These elements are arranged and configured in such a way that the polarization of each photon comprised in the incoming light beam or initial sequence (2) of photons can be corrected before decoding. A system for transmitting a cryptographic key according to a Quantum Key Distribution, protocol with polarization correction and a method for correcting the polarization of each photon comprised in the sequence of photons used in the transmission of a cryptographic key according to a QKD protocol are also disclosed.

## Description

### FIELD OF THE INVENTION

The present invention belongs to the technical field of quantum communications. More specifically, the invention relates to a system adapted to correct the polarization of photons used to transmit a quantum key within the BB84 protocol. The system of the invention works in free space, i.e., in an atmospheric transmission channel, as opposed to optical fiber, avoiding signal loss associated with the latter.

### BACKGROUND OF THE INVENTION

Among other effects, globalization and the development and deployment of many kinds of activities over the internet has brought, in the last decades, a considerable increase in communications all around the world and even beyond. These communications, such as those related to commercial or security operations, often include the exchange of sensible information which must remain confidential from the well-being of the processes and persons involved. For these reasons, the transmission of information is usually done by encrypting the transferred data so that only the appropriate recipient/s can access the information.

Encryption is the process of transforming or encoding information in a way that, ideally, only authorized parties can decode. This process converts the original representation of the information into an alternative form, which is often done according to a key that serves for encoding and decoding the encrypted information. Encryption does not itself prevent that the information does not reach undesired recipients but denies the intelligible content to a would-be interceptor. This is so since the encrypted information may be public as long as the key is transferred securely between the authorized parties involved in the communication.

Nevertheless, the development of new technologies has led to the creation of new ways of hacking or eavesdropping the usual encryption and key-transmission systems, so new, more secure communication frameworks, such as quantum cryptography, have become necessary.

Quantum cryptography is based on the exchange of specific quantum states between a transmitter and a receiver and benefits from the characteristics of quantum systems in order to provide a secure way of transmitting information. The best-known example of quantum cryptography is quantum key distribution (QKD), which offers a secure solution to the key exchange problem. An important and unique property of QKD is the ability of the two communicating users to detect the presence of any third party trying to gain knowledge of the key. This results from a fundamental aspect of quantum mechanics: the process of measuring a quantum system disturbs the system. Therefore, a third party trying to eavesdrop on the key must in some way measure it, thus introducing detectable anomalies. By using quantum superposition or quantum entanglement and transmitting information in quantum states, a communication system that detects eavesdropping can be implemented. If the level of eavesdropping is below a certain threshold, a key can be produced that is guaranteed to be secure. Otherwise, no secure key is possible, and communication is aborted.

The BB84 Quantum Key Distribution protocol is one of the most common ones in practical QKD implementations. This protocol uses four quantum states to encode the key information, which typically consist of polarization states of low-intensity optical pulses. These polarization states are grouped into two pairs of orthogonal linear polarization states, and at 45° between the pairs, each of these pairs representing an encoding basis. At the receiver, two measurement bases are used to project the states and decode their information by measuring their polarization. Each of these measurement bases projects the states onto two orthogonal polarization axes, and each projection is measured with a single-photon detector. In this way, the measurement of each detector corresponds to a different decoding value.

The BB84 protocol operates with maximum efficiency when the transmitter and receiver use the same bases to encode and decode the information. However, in practice, the transmission of states through the optical elements of the transmitter and receiver systems, and through the transmission channel, can introduce variations in the polarization states. These polarization variations cause the photons to be projected onto the opposite axis with a certain probability, resulting in measurements in the wrong single-photon detector. This produces measurement errors even when the transmitter and receiver use the same bases to encode and decode the information, which degrades or disables key exchange.

In systems with an atmospheric transmission channel, the incidence angles of the beams on different optical components change each time the systems are optically aligned, depending on thermal movements of the buildings in which they are located, mechanical tolerances, thermoelasticity of optical components, etc., which implies that the polarization of the states reaching the decoding subsystem is different each time. This generates variations in the measurements due to misalignment between the polarization states and the measurement bases, producing decoding errors. This increases the measurement error of the states and decreases the system's performance, reducing the rate at which secure keys are obtained. In the case of links in atmospheric channels through satellites, the levels of loss and noise are already extremely high, so a slight increase in errors can make key exchange impossible.

Although some efforts have been made to correct the polarization of the optical pulses involved in the information transmission, they are either theoretical models that do not capture the full complexity and casuistry of real systems, or they require expensive and time-consuming implementations, such as high voltage signals, as is often the case with the use of electro-optic polarization modulators, that cause them to lose some of their effectiveness.

In view of the above, there is a need in the field of a system that allows for the efficient and realistic correction of the polarization of optical pulses within an atmospheric transmission channel before decoding in order to reduce the error due to variations introduced along their path from the transmitter to the receiver's decoding system, enabling optimal key exchange with low error.

### BRIEF DESCRIPTION OF THE INVENTION

The present invention overcomes the above limitations of the prior art, by providing a device adapted to be used as a receiver in a QKD system comprising an optical scheme specifically designed for correcting the polarization of transmitted photons in a QKD protocol. The corresponding QKD system and the method for correcting the polarization of photons within the QKD protocol are also disclosed. The device, system and method allow for the correction of the polarization of optical pulses before decoding to reduce the error due to variations introduced along their path from the transmitter to the receiver's decoding system, enabling optimal key exchange with low error. The invention is distinguished from other systems in that the polarization correction can be made automatic, can be performed in free space rather than in optical fiber, and can correct each measurement basis separately. The technology used does not require high voltage signals, as is often the case with the use of electro-optic polarization modulators, nor does it require auxiliary signals, but rather uses the quantum signal sources themselves for correction.

More specifically, the present invention relates in a first aspect to a device for receiving an initial sequence of polarized photons, modifying the polarization of each of said photons and performing measurements upon each of said photons, comprising:
- a beam splitter;
- a first half-wave plate;
- first and second polarizer beam splitters;
- four single-photon detectors; and
- tagging means connected to the single-photon detectors adapted to register the time of arrival of each photon to each single-photon detector and thus the detection rate of each single-photon detector.

Regarding the characteristics and arrangement of each of said elements, the device is configured in such a way that:
- the photons are received in the device from a direction of incidence;
- the beam splitter is arranged along said direction of incidence and is adapted to split in a substantially even way the initial sequence of photons into a first and a second subsequences of photons, the first subsequence of photons propagating along a first optical path and the second subsequence of photons propagating along a second optical path;
- the first polarizer beam splitter (6) is arranged along the first optical path (12) and is adapted to split the first subsequence of photons (11) into a third (13) and fourth (13') subsequences of photons of substantially orthogonal polarizations, the third subsequence of photons (13) propagating along a third optical path (14) and the fourth subsequence of photons (13') propagating along a fourth optical path (14');
- the second polarizer beam splitter (6') is arranged along the second optical path (12') and is adapted to split the second subsequence of photons (11') into a fifth (15) and sixth (15') subsequences of photons of substantially orthogonal polarizations, the fifth subsequence of photons (15) propagating along a fifth optical path (16) and the sixth subsequence of photons (15') propagating along a sixth optical (16') path;
- the first half-wave plate is arranged between the beam splitter and the first polarizer beam splitter along the first optical path; and
- the four single-photon detectors are arranged after the polarizer beam splitters, in a configuration such that there is one detector arranged along each of the third, fourth, fifth and sixth optical paths.

On the other hand, the device further comprises:
- a second half-wave plate arranged between the beam splitter and the second polarizer beam splitter along the second optical path;
- a first quarter-wave plate arranged between the beam splitter and the first polarizer beam splitter along the first optical path;
- a second quarter-wave plate arranged between the beam splitter and the second polarizer beam splitter along the second optical path; and
- rotating means connected to the first and second half-wave plates and to the first and second quarter-wave plates and adapted to rotate each plate individually.

In the context of present invention, the term "after" shall be interpreted according to the propagation direction of the photons. For instance, the four single-photon detectors being arranged after the polarizer beam splitters, shall be interpreted such that the photons comprised in the (sub)sequences of photons will reach the single-photon detectors after reaching the polarizer beam splitters. It is to be noted that the position of the half-wave plate along an optical path can be, in this same sense, both before and after the quarter-wave plate corresponding to the same optical path.

The configuration of the device comprising the beam splitter, the first half-wave plate, the first and second polarizer beam splitters, the four single-photon detectors and the tagging means allows for measuring the number of photons corresponding to each state of two encoding bases such as the one used in most QKD protocols independently. Equivalently and in more generality, the device comprising the listed elements is configured to detect individually photons of four different linear polarization states. Those polarization states can be organized in pairs of orthogonal states, each of said pairs belonging to a polarization or decoding basis and with the two resulting bases rotated 45° with respect to each other. In this configuration, each of the four single-photon detectors detects photons of only one of these states. This detection can be accurately performed, however, only in the ideal case in which there are no disturbing effects in the polarization of the photons before they reach said device.

The additional half- and quarter-wave plates allow, however, for performing measurements of each basis state independently even in the case where there have been polarization fluctuations in the photons' path before reaching the device. More specifically, using two half-wave plates and two quarter-wave plates corresponds to the minimal configuration that makes it possible to correct the polarization of each measuring basis separately. This is achieved thanks to the rotating means that allow for varying the orientation of each of the plates independently with respect to the light beam or sequence of photons. By doing this and combining one half-wave plate and one quarter-wave plate in each optical path, the polarization of each basis can be corrected.

In a preferred embodiment of the invention, the first optical path and the second optical path are substantially perpendicular, the third optical path and the fourth optical path are substantially perpendicular and/or the fifth optical path and the sixth optical path are substantially perpendicular. Also, the direction of the first optical path may coincide with the direction of incidence of the incoming photons.

In a preferred embodiment of the invention, the rotating means comprise four electronically controlled rotary mounts, each one connected to one of the first and second half-wave plates or the first and second quarter-wave plates. More preferably, the device further comprises a microcontroller connected to the rotating means and adapted to send an instruction to said rotation means to rotate each plate individually. Even more preferably, the microcontroller is further connected to the tagging means and the instruction sent by the microcontroller to the rotating means is based on the detection rate of each single-photon detector as measured by the tagging means.

These features allow for correcting the polarization of the incoming photons in an automatic way, since the rotation of the plates can be completely controlled by the microcontroller using as input the detection rate of each single-photon detector.

In another preferred embodiment of the invention, the microcontroller is further connected to a conditioning circuit at the electronic output of each single-photon detector, and the instruction sent by the microcontroller to the rotating means is based on a number of pulses per second registered at each of the forementioned electronic output.

In a second aspect, the invention relates to a system for transmitting a cryptographic key according to a Quantum Key Distribution, QKD, protocol with polarization correction comprising:
- a transmitter adapted to prepare and send a sequence of photons in which the polarization of each photon has been previously selected from a group comprising two pairs of orthogonal linear polarization states, being said pairs of orthogonal linear polarization states rotated at 45° between one another;
- an atmospheric or free space transmission channel, and
- a device for receiving an initial sequence of polarized photons, modifying the polarization of each of said photons and performing measurements upon each of said photons according to any one of the described embodiments.

The main advantage of said system is that the polarization correction can be carried out by using as only input the quantum signal sources themselves, so there is no need for high voltage signals, as is often the case with the use of electro-optic polarization modulators, nor for other kinds of auxiliary signals. Furthermore, since the polarization correction can be implemented directly within the system that is used for transmitting the quantum key, the correction process does not rely in theoretical models that may not encode the whole complexity of the system. In fact, the correction is performed in a tailored manner for each system, ensuring the efficiency of the correction throughout the use of said system.

Regarding the transmission channel, free-space correction is especially advantageous in QKD systems with an atmospheric transmission channel, where inserting the light beams into an optical fiber can result in high loss levels, leading to low or zero performance in long-distance links. The main advantage of performing polarization correction at the receiver by means of free space components, as opposed to implementations using components coupled to optical fiber (single mode, which is the most commonly used in classical telecommunications) is that the absence of such fiber means that there are no size restrictions for the optical beam to be corrected. This, in the case in which the optical beams have atmospheric or optical aberrations, constitutes an advantage, since Adaptive Optics techniques are not required to perform the coupling to single mode fiber. This is due to the fact that these techniques allow for correcting the spatial profile of the received beam that leads to a reduction in size, which allows reducing losses when coupled to single-mode fiber. Although these techniques provide this advantage, they are usually expensive and complex, so avoiding them simplifies the experimental implementation of the systems.

On the other hand, the implementation in air or free space allows the size of the received beam to be adapted by using different lenses in the receiver, depending on the type of receiver used in the detection, which may vary depending on the technology and on the type of spatial filtering to reduce background noise that is desired. This can be achieved through diaphragms or pinholes and provides greater versatility to the design, which increases its detection efficiency.

In another preferred embodiment of the invention, the QKD protocol comprises a BB84 protocol.

In another preferred embodiment of the invention, the transmitter is arranged substantially on the Earth's surface and the device for receiving a sequence of polarized photons, modifying the polarization of each of said photons and performing measurements upon each of said photons is arranged on a satellite placed in orbit. In this embodiment free-space correction is especially advantageous, since the use of fiber optics in long distance links such as satellite links can result in high loss levels, leading to low or zero performance of the system. Moreover, using the quantum signal itself as explained above not only eliminates possible misalignments between the quantum signal and any auxiliary correction signal but also and reduces the need to add elements to the transmitter, which is the one embarked on a satellite. This reduces the mass, volume, and power requirements needed for the satellite payload, which is of great importance in these cases.

Finally, in a third aspect the present invention relates to a method for correcting the polarization of each photon comprised in a sequence of photons used in the transmission of a cryptographic key according to a QKD protocol, the method comprising operating a system according to any one of the embodiments described above and performing the following steps:
a) producing and sending, with the transmitter, a sequence of identically polarized photons;
b) configuring the first and second half-wave plates and the first and second quarter-wave plates in an initial position;
c) receiving the sequence of photons sent in step a) in the device;
d) measuring the photon detection rate in the four single-photon detectors;
e) identifying, as first single-photon detector, the single-photon detector with the highest rate, identifying, as second single-photon detector, the single-photon detector arranged after the same polarizer beam splitter as the first single-photon detector and identifying the optical path along which said polarizer beam splitter is arranged;
f) rotating, by using the rotating means, the half-wave plate arranged at the optical path identified in step e) and measuring the photon detection rate in the first and second single-photon detectors;
g) repeating step f) until the ratio between the detection rates in the first single-photon detector and in the second single-photon detector is maximized for that configuration;
h) rotating, by using the rotating means, the quarter-wave plate arranged at the optical path identified in step e) and measuring the photon detection rate in the first and second single-photon detectors;
i) repeating step h) until the ratio between the detection rates in the first single-photon detector and in the second single-photon detector is maximized for that configuration;
j) repeating steps f)-i) until the ratio between the detection rates in the first single-photon detector and in the second single-photon detector is maximized.
k) producing and sending, with the transmitter, a sequence of identically polarized photons, the polarization of said photons being rotated 45° with respect to that of the photons produced and sent in step a);
l) receiving the sequence of photons sent in step h) in the device;
m) measuring the photon detection rate in the four single-photon detectors;
n) identifying, as third single-photon detector, the single-photon detector with the highest rate, identifying, as fourth single-photon detector, the single-photon detector arranged after the same polarizer beam splitter as the third single-photon detector and identifying the optical path along which said polarizer beam splitter is arranged;
o) rotating, by using the rotating means, the half-wave plate arranged at the optical path identified in step j) and measuring the photon detection rate in the third and fourth single-photon detectors;
p) repeating step n) until the ratio between the detection rates in the third single-photon detector and in the fourth single-photon detector is maximized for that configuration;
q) rotating, by using the rotating means, the quarter-wave plate arranged at the optical path identified in step j) and measuring the photon detection rate in the third and fourth single-photon detectors;
r) repeating step p) until the ratio between the detection rates in the third single-photon detector and in the fourth single-photon detector is maximized for that configuration; and
s) repeating steps n)-q) until the ratio between the detection rates in the third single-photon detector and in the fourth single-photon detector is maximized.

This method allows for correcting the polarization in each measurement basis separately which in turn allows for simpler and faster control loops to correct the polarization compared to correcting it in the common path of all polarization states.

It should be noted that the described method can be carried out in a completely automatic way, by performing steps b), e)-j) and n)-s) within a computer or by other sort of control and computing means, as in the case in which the system comprises a microcontroller connected to the rotating means and to the tagging means. In that case, the measurements obtained in step d) would be sent to the microcontroller which would then perform step e) accordingly and send an instruction to the corresponding rotating means based on said measurements. It is to be noted that this is an iterative process, in which measurements are taken after every rotation, in order to identify correctly the configuration of the system in which the polarization correction is maximized.

All the terms and embodiments described anywhere in this document are equally applicable to all aspects of the invention. It should be noted that, as used in the specification and in the appended claims, the singular forms "a", "an", and "the" include their plural referents unless the context clearly indicates otherwise. Similarly, the term "comprises" or "comprising" as used herein also describes "consists of" or "consisting of" in accordance with generally accepted patent practice.

### DESCRIPTION OF THE DRAWINGS

The foregoing and other features and advantages will be more fully understood from the detailed description of the invention, as well as from examples referring to the attached figures, which are described in the following paragraphs, wherein:

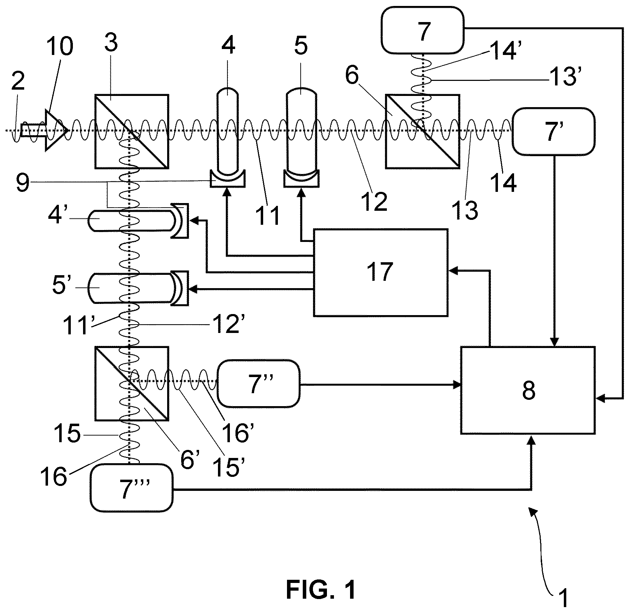

Figure 1 shows a schematic representation of a device according to an embodiment of the present invention.

### Numerical references used in the drawings

In order to provide a better understanding of the technical features of the invention, the referred Figure 1 are accompanied of a series of numerical references which, with an illustrative and non-limiting character, are hereby represented:

| | |
|---|---|
| 1 | Device |
| 2 | Initial sequence of photons |
| 3 | Beam splitter |
| 4 | First half-wave plate |
| 4' | Second half-wave plate |
| 5 | First quarter-wave plate |
| 5' | Second quarter-wave plate |
| 6 | First polarizer beam splitter |
| 6' | Second polarizer beam splitter |
| 7, 7', 7", 7‴ | Single-photon detector |
| 8 | Tagging means |
| 9 | Rotating means |
| 10 | Direction of incidence of the initial sequence of photons |
| 11 | First subsequence of photons |
| 11' | Second subsequence of photons |
| 12 | First optical path |
| 12' | Second optical path |
| 13 | Third subsequence of photons |
| 13' | Fourth subsequence of photons |
| 14 | Third optical path |
| 14' | Fourth optical path |
| 15 | Fifth subsequence of photons |
| 15' | Sixth subsequence of photons |
| 16 | Fifth optical path |
| 16' | Sixth optical path |
| 17 | Microcontroller |

### DETAILED DESCRIPTION OF THE INVENTION

The detailed description of the present invention to be described below refers to the accompanying drawings, which illustrate specific embodiments in which the present invention may be implemented. These embodiments will be described in detail sufficient to enable those skilled in the art to implement the present invention. It should be understood that various embodiments of the present invention are different from each other but need not be mutually exclusive. Accordingly, the detailed description to be described below is not intended to be taken in a limiting meaning, and the scope of the present invention, if properly described, is limited only by the appended claims, in addition to all scopes equivalent to those claimed by the appended claims. In the drawings, reference numerals refer to the same or similar functions over several aspects.

Hereinafter, preferred embodiments of the present invention will be described in more detail with reference to the accompanying drawings.

Figure 1 shows a device (1) according to an embodiment for receiving an initial sequence (2) of photons, modifying the polarization of each of said photons and performing measurements upon each of said photons according to an embodiment of the present invention.

In said figure, the following elements are displayed:
- a beam splitter (3);
- a first half-wave plate (4) and a second half-wave plate (4');
- a first quarter-wave plate (5) and a second quarter-wave plate (5');
- a first polarizer beam splitter (6) and a second polarizer beam splitter (6');
- four single-photon detectors (7, 7', 7", 7‴);
- tagging means (8) connected to the single-photon detectors (7, 7', 7", 7‴); and
- rotating means (9) connected to the first and second half-wave plates (4, 4') and to the first and second quarter-wave plates (5, 5').

These elements are arranged and configured in such a way that the polarization of each photon comprised in an incoming light beam or initial sequence (2) of photons can be corrected. Specifically, the beam splitter (3) is arranged along the direction of incidence (10) of the photons received in the device and is adapted to split evenly the initial sequence (2) of photons into a first (11) and a second (11') subsequences of photons. The first subsequence of photons (11) corresponds to that whose propagation direction is not modified by the beam splitter (3), whereas the second subsequence of photons (11') corresponds to that whose propagation direction is modified by the beam splitter (3) by 90°. This means that the photons comprised in the first subsequence of photons (11) propagate, after interacting with the beam splitter (3), along a first optical path (12) coincident with the direction of incidence (10) of the initial sequence (2) of photons, and that the second subsequence of photons (11') propagates, after interacting with the beam splitter (3), along a second optical path (12') perpendicular to the first optical path.

The first polarizer beam splitter (6) is arranged along the first optical path (12) and is adapted to split the first subsequence of photons (11) into a third (13) and fourth (13') subsequences of photons according to the polarization of each of the photons comprised in the first subsequence of photons (11). Similarly, as in the beam splitter case (3), the third subsequence of photons (13) propagates, after interacting with the first polarizer beam splitter (6), along a third optical path (14) coincident with the first optical path (12), whereas the fourth subsequence of photons (12') propagates, after interacting with the first polarizer beam splitter (6), along a fourth optical path (14') perpendicular to the third optical path (14);

The second polarizer beam splitter (6') acts on the second subsequence of photons (11') in the same way as the first polarizer beam splitter (6) acts on the first subsequence of photons (11'). Therefore, the second polarizer beam splitter (6') is arranged along the second optical path (12') and is adapted to split the second subsequence of photons (11') into a fifth (15) and sixth (15') subsequences of photons according to the polarization of each of the photons comprised in the second subsequence of photons (11'). In this case, the fifth subsequence of photons (15) propagates, after interacting with the second polarizer beam splitter (6'), along a fifth optical path (16) coincident with the second optical path (12') and the sixth subsequence of photons (15') propagates, after interacting with the second polarizer beam splitter (6'), along a sixth optical path (16') perpendicular to the fifth optical path (15).

Regarding the plates, they are all arranged between the beam splitter (3) and the polarizer beam splitters (6, 6'). The first half-wave plate (4) and the first quarter-wave plate (5) are arranged along the first optical path (12) and between the beam splitter (3) and the first polarizer beam splitter (6). The second half-wave plate (4') and the second quarter-wave plate (5') are arranged along the second optical path (12') and between the beam splitter (3) and the second polarizer beam splitter (6').

Finally, the four single-photon detectors (7, 7', 7", 7‴) are arranged after the polarizer beam splitters (6, 6'), in a configuration such that there is one single-photon detector (7, 7', 7", 7‴) arranged along each of the third (14), fourth (14'), fifth (16) and sixth (16') optical paths, as seen in Figure 1. It shall be interpreted that "after" refers to the propagation direction of photons, in the sense that every photon would interact with the corresponding single-photon detector (7, 7', 7", 7‴) after interacting with the corresponding polarizer beam splitter (6, 6').

In addition to the elements described above, the device (1) of Figure 1 comprises a microcontroller (17) connected to the rotating means (9) and to the tagging means (8). The microcontroller (17) allows for correcting the polarization of the received photons automatically, since it may receive the detection rate of each single-photon detector (7, 7', 7", 7‴) as measured by the tagging means (8), and, according to said information, elaborate instructions to be sent to the rotating means (9) in order to rotate each plate (4, 4', 5, 5') individually. In this case, the rotating means (9) may comprise electronically controlled rotary mounts.

The device (1) depicted in Figure 1 may be used as the transmitter of a system for transmitting a cryptographic key according to a Quantum Key Distribution (QKD) protocol. Said system would then be able to transmit a cryptographic quantum key safely and accurately, without errors introduced by changes in the polarization of the photons in their path from the transmitter to the receiver. In this sense, the system may comprise a transmitter adapted to prepare and send a sequence of photons in which the polarization of each photon has been previously selected from a group comprising two pairs of orthogonal linear polarization states, being said pairs of orthogonal linear polarization states rotated at 45° between one another and a device (1) as described above or as described in any of the embodiments of the present invention acting as the receiver. The transmission channel would correspond to an atmospheric or free space transmission channel, benefiting from the above-commented advantages with respect to other transmission channels such as those employing optical fibers.

All the unwanted modifications introduced in the polarization of the photons in their propagation from the transmitter to the receiver may be corrected before decoding thanks to a device (1) according to the present invention. In the described embodiment, each plate (4, 4', 5, 5') is arranged on an electronically controlled rotary mount, so it is possible to vary its angle using electronic signals. In addition to the plates (4, 4', 5, 5') used as actuators to modify the polarization of the optical pulses or sequences of photons, the single-photon detectors (7, 7', 7", 7‴) required by any QKD decoder are used to measure the quality of the correction performed by the plates (4, 4', 5, 5'). The microcontroller (17) obtains the detection rate of each single-photon detector (7, 7', 7", 7‴) through a time-tagging device, or alternatively through a conditioning circuit, and sends electronic signals to the rotary mounts to rotate the plates and correct the polarization. The control loop consists of the QKD system transmitter generating a state of one of the bases, i.e., a sequence of identically polarized photons, and the receiver using the invention's device (1) to correct said polarization state in the corresponding basis. This procedure is repeated for a state of the other basis, and the polarization of all states is corrected, enabling key exchange with fewer errors due to undesired polarization changes.

Specifically, the correction of each state is performed with the count rate of each single-photon detector (7, 7', 7", 7‴). First, as mentioned, a sequence of identically polarized photons, corresponding to a state of one of the used bases is produced and sent by the transmitter. Said sequence, after propagating in air or free space, is received by the device (1) of the invention which acts as a receiver. With the device (1) configured in an initial position, i.e., with the plates (4, 4', 5, 5') oriented in corresponding initial directions (which may be specific or random directions) the four single-photon detectors (7, 7', 7", 7‴) begin to measure the photons that arrive at each of them. The measurement in the four single-photon detectors (7, 7', 7", 7‴) is carried out continuously during the whole polarization correction procedure.

A first single-photon detector is identified as the single-photon detector (7, 7', 7", 7‴) with the highest rate, and a second single-photon detector is identified as the single-photon detector (7, 7', 7", 7‴) arranged after the same polarizer beam splitter (6, 6') as the first single-photon detector. The optical path along which said polarizer beam splitter (6, 6') is arranged is also identified. Then, by using the rotating means (9), the half-wave plate arranged at an optical path parallel to the identified optical path is rotated until the ratio between the detection rates in the first single-photon detector and in the second single-photon detector is maximized for that configuration. It is to be noted that this is done according to the continuous measurements performed by the single-photon detectors (7, 7', 7", 7‴) after each rotation of the half-wave plates.

After this local maximum of the described ratio has been found, the equivalent process is carried out for the corresponding quarter-wave plate. This procedure is performed iteratively, alternating between the half-wave and the quarter-wave plates until the global maximum is found.

Finally, the same process is repeated for the other basis, i.e., by preparing and sending a sequence of identically polarized photons whose polarization is rotated 45° with respect to that of the photons produced before.

In this way, the polarization of those photons corresponding to any state of any of the used bases is corrected. As mentioned before, the configuration of the device (1) comprising the beam splitter (3), the first half-wave plate (4), the first and second polarizer beam splitters (6, 6'), the four single-photon detectors (7, 7', 7", 7‴) and the tagging means (8) allows for measuring the number of photons of four different linear polarization states that arrive at the device (1). As those polarization states can be organized in pairs of orthogonal states, each of said pairs belonging to a polarization or decoding basis and with the two resulting bases rotated 45° with respect to each other, in this configuration, each of the four single-photon detectors (7, 7', 7", 7‴) detects photons of only one of these states. Therefore, the optimal case, i.e., that in which the initial polarization of the photons as produced by the transmitter has not been modified during their propagation, corresponds to each of the single-photon detectors (7, 7', 7", 7‴) detecting only photons polarized according to one and only one of the states of a basis. This is maximally achieved in a realistic environment thanks to the use of a device (1) according to the present invention.

## Claims

1. Device (1) for receiving an initial sequence (2) of photons, modifying the polarization of said photons individually and performing measurements upon said photons, comprising:
- a beam splitter (3);
- a first half-wave plate (4);
- first (6) and second (6') polarizer beam splitters;
- four single-photon detectors (7, 7', 7", 7‴); and
- tagging means (8) connected to the single-photon detectors (7, 7', 7", 7‴) adapted to register a timestamp of arrival of the photons to each of the four single-photon detectors (7, 7', 7", 7‴) and a detection rate of each single-photon detector (7, 7', 7", 7‴);
wherein:
- the beam splitter (3) is adapted to split in a substantially even way the initial sequence (2) of photons into a first (11) and a second (11') subsequences of photons, the first subsequence of photons (11) propagating along a first optical path (12) and the second subsequence of photons (11') propagating along a second optical path (12');
- the first polarizer beam splitter (6) is arranged along the first optical path (12) and is adapted to split the first subsequence of photons (11) into a third (13) and fourth (13') subsequences of photons of substantially orthogonal polarizations, the third subsequence of photons (13) propagating along a third optical path (14) and the fourth subsequence of photons (13') propagating along a fourth optical path (14');
- the second polarizer beam splitter (6') is arranged along the second optical path (12') and is adapted to split the second subsequence of photons (11') into a fifth (15) and sixth (15') subsequences of photons of substantially orthogonal polarizations, the fifth subsequence of photons (15) propagating along a fifth optical path (16) and the sixth subsequence of photons (15') propagating along a sixth optical (16') path;
- the first half-wave plate (4) is arranged between the beam splitter (3) and the first polarizer beam splitter (6) along the first optical path (12); and
- the four single-photon detectors (7, 7', 7", 7‴) are arranged after the polarizer beam splitters (6, 6'), in a configuration such that there is one single-photon detector (7, 7', 7", 7‴) arranged along each of the third (14), fourth (14'), fifth (16) and sixth (16') optical paths;
and **characterized in that** the device further comprises:
a second half-wave plate (4') arranged between the beam splitter (3) and the second polarizer beam splitter (6') along the second optical path (12');
a first quarter-wave plate (5) arranged between the beam splitter (3) and the first polarizer beam splitter (6) along the first optical path (12);
a second quarter-wave plate (5') arranged between the beam splitter (3) and the second polarizer beam splitter (6') along the second optical path (12'); and
rotating means (9) connected to the first and second half-wave plates (4, 4') and to the first and second quarter-wave plates (5, 5') and adapted to rotate each plate (4, 4', 5, 5') individually.

2. A device (1) according to claim 1, wherein:
- the first optical path (12) and the second optical path (12') are substantially perpendicular;
- the third optical path (14) and the fourth optical path (14') are substantially perpendicular; and/or
- the fifth optical path (16) and the sixth optical path (16') are substantially perpendicular.

3. A device (1) according to any one of claims 1 or 2, wherein the rotating means (9) comprise four electronically controlled rotary mounts, each one connected to one of the first and second half-wave plates (4, 4') or the first and second quarter-wave plates (5, 5').

4. A device (1) according to any one of claims 1 or 3, further comprising a microcontroller (17) connected to the rotating means (9) and adapted to send an instruction to said rotating means (9) to rotate each plate (4, 4', 5, 5') individually.

5. A device (1) according to claim 4, wherein the microcontroller (17) is further connected to the tagging means (8) and wherein the instruction sent by the microcontroller (17) to the rotating means (9) is based on the detection rate of each single-photon detector (7, 7', 7", 7‴) as measured by the tagging means (8).

6. A device (1) according to claim 4, wherein the microcontroller (17) is further connected to a conditioning circuit at the electronic output of each of the single-photon detectors (7, 7', 7", 7‴) and wherein the instruction sent by the microcontroller (17) to the rotating means (9) is based on a number of pulses per second counted by the microcontroller (17).

7. A system for transmitting a cryptographic key according to a Quantum Key Distribution, QKD, protocol with polarization correction comprising:
- a transmitter adapted to prepare and send a sequence of photons in which the polarization of each photon has been previously selected from a group comprising two pairs of orthogonal linear polarization states, being said pairs of orthogonal linear polarization states rotated at 45° between one another;
- an atmospheric or free space transmission channel, and
- a device (1) according to any one of claims 1 to 6.

8. A system according to claim 7, wherein the QKD protocol comprises a BB84 protocol.

9. A system according to any one of claims 7 or 8, wherein the transmitter is arranged substantially on the Earth's surface and wherein the device (1) for receiving an initial sequence (2) of polarized photons, modifying the polarization of said photons individualy and performing measurements upon said photons is arranged on a satellite placed in orbit.

10. A method for correcting the polarization of photons comprised in an initial sequence of polarized photons (2) used in the transmission of a cryptographic key according to a QKD protocol, the method comprising operating a system according to any one of claims 7 to 9 and performing the following steps:
a) producing and sending, with the transmitter, a sequence of identically polarized photons;
b) configuring the first and second half-wave plates (4, 4') and the first and second quarter-wave plates (5, 5') in an initial orientation with respect to the direction of incidence (10) of the sequence of photons;
c) receiving the sequence of photons sent in step a) in the device (1);
d) measuring the photon detection rate in the four single-photon detectors (7, 7', 7", 7‴);
e) identifying, as first single-photon detector, the single-photon detector (7, 7', 7", 7‴) with the highest rate, identifying, as second single-photon detector, the single-photon detector (7, 7', 7", 7‴) arranged after the same polarizer beam splitter (6 or 6') as the first single-photon detector and identifying the optical path (12 or 12') along which said polarizer beam splitter (6 or 6') is arranged;
f) rotating, by using the rotating means (9), the half-wave (4 or 4') plate arranged at the optical path identified in step e) (12 or 12') and measuring the photon detection rate in the first and second single-photon detectors;
g) repeating step f) until the ratio between the detection rates in the first single-photon detector and in the second single-photon detector is maximized for that configuration;
h) rotating, by using the rotating means (9), the quarter-wave plate (5 or 5') arranged on the optical path identified in step e) (12 or 12') and measuring the photon detection rate in the first and second single-photon detectors;
i) repeating step h) until the ratio between the detection rates in the first single-photon detector and in the second single-photon detector is maximized for that configuration;
j) repeating steps f)-i) until the ratio between the detection rates in the first single-photon detector and in the second single-photon detector is maximized.
k) producing and sending, with the transmitter, a sequence of identically polarized photons, the polarization of said photons being rotated 45° with respect to that of the photons produced and sent in step a);
l) receiving the sequence of photons sent in step h) in the device (1);
m) measuring the photon detection rate in the four single-photon detectors;
n) identifying, as third single-photon detector, the single-photon detector (7, 7', 7", 7‴) with the highest rate, identifying, as fourth single-photon detector, the single-photon detector (7, 7', 7", 7‴) arranged after the same polarizer beam splitter (6 or 6') as the third single-photon detector and identifying the optical path (12 or 12') along which said polarizer beam splitter (6 or 6') is arranged;
o) rotating, by using the rotating means (9), the half-wave plate (4 or 4') arranged on the optical path identified in step j) (12 or 12') and measuring the photon detection rate in the third and fourth single-photon detectors;
p) repeating step n) until the ratio between the detection rates in the third single-photon detector and in the fourth single-photon detector is maximized for that configuration;
q) rotating, by using the rotating means (9), the quarter-wave plate (5 or 5') arranged on the optical path identified in step j) (12 or 12') and measuring the photon detection rate in the third and fourth single-photon detectors;
r) repeating step p) until the ratio between the detection rates in the third single-photon detector and in the fourth single-photon detector is maximized for that configuration; and
s) repeating steps n)-q) until the ratio between the detection rates in the third single-photon detector and in the fourth single-photon detector is maximized, obtaining a device (1) for receiving an initial sequence (2) of photons and performing measurements upon said photons wherein the polarization of said photons for that specific transmitter has been corrected.
